# FASCICULE DE BREVET EUROPEEN

(11) **EP 1 210 507 B1**
(45) Date de publication et mention de la délivrance du brevet: **23.02.2005**
(21) Numéro de dépôt: 00953407.4
(22) Date de dépôt: 04.09.2000
(51) Int. Cl.: F01N 3/04

(54) **PROCEDE ET DISPOSITIF DE DEPOLLUTION DES GAZ DE COMBUSTION**
VERFAHREN UND VORRICHTUNG ZUR ENTGIFTUNG VON VERBRENNUNGSABGASEN
METHOD AND DEVICE FOR DEPOLLUTING COMBUSTION GASES

(30) Priorité: 08.09.1999 EP 99810805; 04.02.2000 CH 223002000; 28.02.2000 CH 379002000
(43) Date de publication de la demande: 05.06.2002
(73) Titulaire: S.F.T. SERVICES SA, 1950 Sion (CH)
(72) Inventeur: BRUZZO, Vital, I-Vicenza 36040 (IT)
(74) Mandataire: Cronin, Brian Harold John
(86) Numéro de dépôt international: PCT/IB2000/001245
(87) Numéro de publication internationale: WO 2001/018366

(56) Documents cités:
- DE-A- 3 007 962
- GB-A- 1 357 034
- US-A- 5 383 341

## Description

La présente invention concerne un procédé et dispositif de traitement des gaz de combustion, et plus particulièrement un procédé et un dispositif pour la dépollution de gaz de combustion.

Lors d'une combustion de carburants tels que l'essence ou le gazole, un grand nombre de composés sont produits tels que les oxydes d'azote (NOₓ), le monoxyde de carbone (CO) et les hydrocarbures (HC). A cela s'ajoute. l'ozone (O₃), un polluant secondaire formé par des réactions photochimiques entre oxydes d'azote et hydrocarbures.

Les pouvoirs publics ont encouragé les recherches dans le but de réduire ces émissions nocives, et de nombreux dispositifs ont été proposés. On connaît, dans le domaine de l'automobile, l'utilisation du catalyseur dont l'action est de brûler ces substances nocives.

Malheureusement, le catalyseur ne fait que réduire certaines émissions, et en contrepartie transforme certains composés en substances encore plus dangereuses.

D'autres solutions ont été présentées, en particulier dans le domaine de l'industrie, avec l'utilisation de filtres à eau placés dans les conduits de cheminées pour capturer et récupérer des substances toxiques dans de l'eau. Cette eau est retraitée afin de la séparer de ces substances et est ensuite réinjectée dans le circuit de filtration.

Bien qu'une certaine amélioration de la qualité de l'air aie été constatée grâce à l'utilisation de ces dispositifs de dépollution, ceux-ci présentent des lacunes, soit dans leur mise en oeuvre, soit de par leur coût ou leur efficacité.

Le but de la présente invention est de proposer un procédé et dispositif qui supprime 100% des substances les plus toxiques tout en ne générant aucune autre substance nouvelle.

Ce but est pleinement atteint par le dispositif de dépollution des gaz de combustion de la présente invention, caractérisé en ce que ce dispositif comprend une chambre de refroidissement des gaz à basse température.

Selon l'invention, le procédé consiste à dépolluer les gaz de combustion en les refroidissant à basse température.

L'effet de dépollution est obtenu par la condensation des substances polluantes dans une chambre où les gaz sont refroidis à une température de quelques degrés au-dessus de zéro. L'effet de condensation se produit dès lors que l'on refroidit les gaz, étant entendu que plus la température descend, plus l'effet augmente.

La température optimale de condensation se situe près de zéro degré Celsius, de préférence entre 3 et 6 °C, c'est-à-dire juste avant que des cristaux de glace ne se forment. En effet, la formation de glace aurait pour conséquence l'obstruction rapide de l'échappement.

Le liquide de condensation est ensuite récupéré en vue de son élimination écologique.

Ce type de dispositif peut être utilisé sur un grand nombre d'installations, par exemple sur les cheminées d'usine d'incinération, ainsi que pour d'autres applications de cheminées industrielles, de même dans le domaine des véhicules à moteur à combustion interne.

Dans ce dernier domaine, la présente invention s'étend également à un dispositif de production de froid (par exemple la climatisation) par récupération de l'énergie thermique des gaz d'échappement du véhicule.

De tels dispositifs sont décrits dans l'état de la technique, en particulier dans le document GB-A-1357034 qui décrit un dispositif de dépollution des gaz de combustion selon le préambule de la revendication 1.

Le document US 5'383'341 décrit un système de réfrigération basé sur le principe de l'absorption, et dont l'énergie est fournie par les gaz d'échappement. Ce système ne concerne que l'utilisation judicieuse de l'énergie générée par les gaz, énergie thermique qui est utilisée pour le production de froid.

Bien que le but principal de cette invention soit la dépollution des gaz de combustion, l'invention s'étend également à un système performant pour la production d'énergie frigorifique par récupération de l'énergie thermique des gaz de combustion.

Aux fins de refroidir les gaz d'échappement, il est utilisé un évaporateur placé dans le pot d'échappement qui refroidit substantiellement lesdits gaz. Des récupérateurs placés le long de l'évaporateur collectent le liquide de condensation. Ce liquide peut être, soit éliminé écologiquement à un rythme équivalent à la vidange de l'huile moteur, ou soit réinjecté dans le réservoir. En effet, au vu de sa production en faible quantité, son mélange à l'essence ou au diesel ne pose aucun problème.

Dans une forme particulière de l'invention, le mélange réfrigérant-absorbant utilisé pour le cycle thermique est un mélange d'eau (l'absorbant) et d'ammoniac (le réfrigérant). Ce dernier présente une bonne propriété d'expansion, caractéristique essentielle dans ce type d'utilisation. Des essais ont montré qu'au delà de 70% d'eau dans le mélange, le cycle ne fonctionne plus de manière optimale.

L'invention sera mieux comprise grâce à la description détaillée qui va suivre en se référant aux dessins annexés qui sont donnés à titre d'exemple nullement limitatif, dans lesquels :

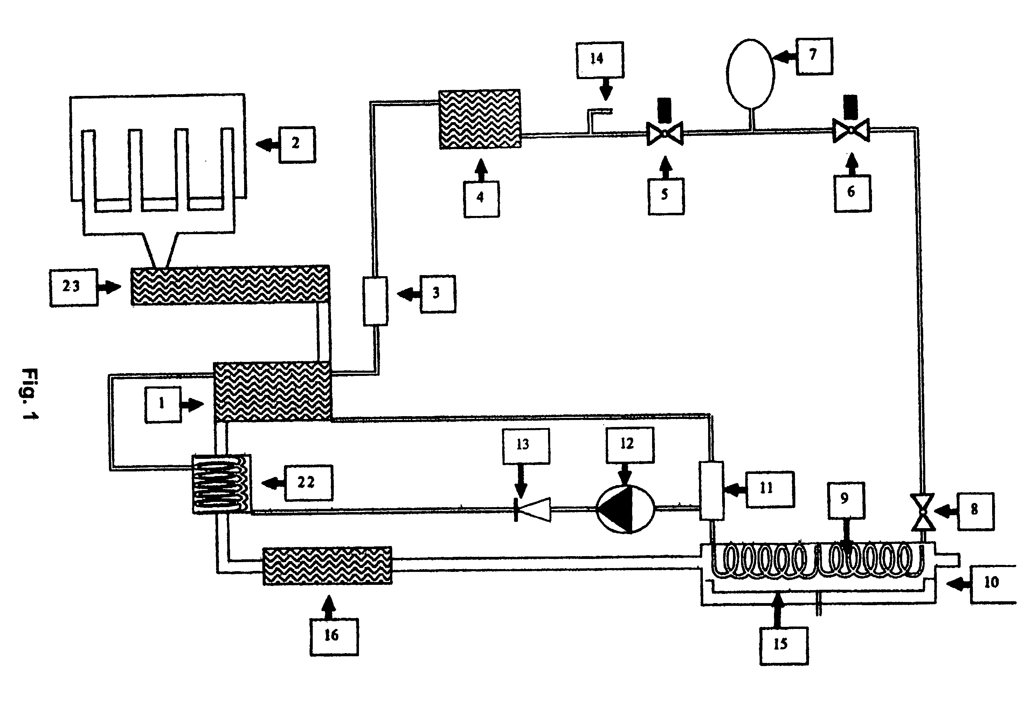

- La figure 1 représente le système de dépollution des gaz utilisant comme source d'énergie les gaz de combustion d'un moteur à explosion;
- La figure 2 représente un dispositif de nettoyage automatique de l'évaporateur.
- La figure 3 représente l'intégration d'un élément catalyseur-bouilleur

**TABLEAU**

| Désignation de la substance | Quantité avant le filtre(% du volume) | Quantité après le filtre (% du volume) |
|---|---|---|
| Toluène | 0.28 | 0 |
| 2,4-Diméthylheptène | - | - |
| Octanal | 0.1 | 0 |
| n-Nonane | 0.17 | 0 |
| N-Décane | - | - |
| 4-Méthvldécane | 0.32 | 0 |
| Propylcyclopentane | 0.16 | 0 |
| Undécane | - | - |
| Dodécane | - | - |
| 1-Chlorohexadécane | 0.01 | 0 |
| 1-Chloro-octadécane | 0.01 | 0 |
| n-Tridécane | 0.08 | 0 |
| 1,2,3,4-Tétrahydro-5- | - | - |
| n-Tétradécane | - | - |
| 2,7-Diméthylnaphtalène | - | - |
| Cyclotétradécane | 0.1 | 0 |
| 2,6,11-Triméthyldodécane | 0.2 | 0 |
| 3,8-Diméthyldécane | 0.1 | 0 |
| n-Pentadécane | 0.42 | 0 |
| n-Hexadécane | - | - |
| n-Eicosane | - | - |
| n-Heptadécane | - | - |
| n-Octadécane | - | - |

Sur le Tableau on a représenté le résultat de l'analyse d'un échantillon d'émission de gaz d'échappement d'un tracteur sur lequel le système selon l'invention a été monté. On peut observer que tous les composés de faible poids moléculaire ont été supprimé à 100%. D'une manière générale, des polluants de faible poids moléculaire tels que le toluène, l'aldéide ainsi que certains hydrocarbures de faible poids (par exemple la chloroparaffine) disparaissent complètement. Ne restent que les molécules de poids importantes qui échappent à la condensation. On notera en particulier l'élimination totale du toluène, substance connue comme dangereuse. Globalement, avec l'abaissement de la température des gaz à 6°C, on élimine 75% des polluants.

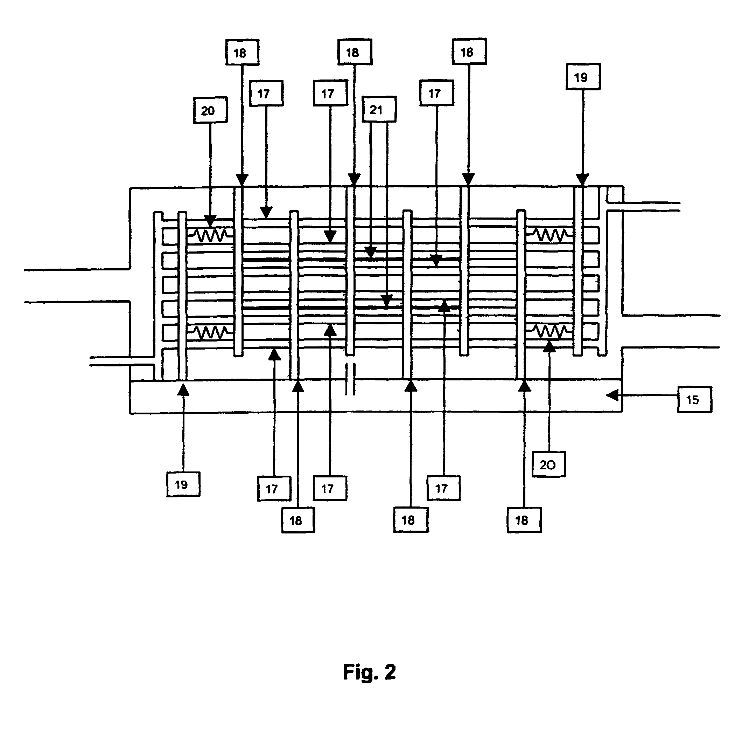

La figure 2 représente un système complet d'utilisation de l'invention sur un véhicule, avec une utilisation première pour l'application de dépollution et secondaire comme production de froid pour le véhicule. Le mélange eau-ammoniac passe par le bouilleur 1 alimenté en chaleur par les gaz d'échappement sortant du moteur 2. Le point d'ébullition de l'ammoniac est très bas (de l'ordre de -33°C) et sous l'effet de la chaleur des gaz, il s'évapore, abandonnant l'eau dans laquelle il était mélangé. Du fait qu'une partie de l'eau se vaporise également, on place un séparateur de liquide 3 qui a pour mission de retenir les vapeurs d'eau et de ne laisser passer que les vapeurs d'ammoniac. Ces vapeurs passent ensuite par un condenseur 4 qui transforme les vapeurs sous forme liquide grâce à la pression produite par le système. L'eau, plus lourde que l'ammoniac, se retrouve dans la partie inférieure du bouilleur 1 et est conduite dans l'absorbeur 11 pour sa recombinaison avec l'ammoniac terminant son cycle de transfert.

Une des particularités de cet ensemble est constituée par les électrovannes 5 et 6 et le réservoir 7. La première électrovanne 5 s'ouvre dès lors que la pression côté réservoir est plus faible que côté condenseur 4. La deuxième électrovanne 6 est commandée par le contact d'alimentation du moteur. A l'arrêt, l'électrovanne 6 est fermée et l'électrovanne 5 se ferme dès lors que la pression provoquée par l'évaporation de l'ammoniac disparaît, c'est-à-dire lorsque les gaz n'échauffent plus le bouilleur 1. Dans ce cas, le réservoir 7 conserve la pression de fonctionnement sous forme de liquide sous pression, les deux électrovannes étant fermées.

Lors du démarrage du moteur, l'électrovanne 6 s'ouvre et la pression accumulée dans le réservoir 7 produit immédiatement du froid dans l'évaporateur de l'échappement. Cette configuration se distingue du système à pot catalytique qui ne fonctionne pas immédiatement, ce dernier nécessitant un temps de chauffe de plusieurs minutes.

En amont du pot d'échappement final, on trouve un premier étage de refroidissement 16 qui permet d'abaisser la température des gaz à environ 50 °C.

Près du pot d'échappement 10, on trouve la valve d'expansion 8 régulée par un capteur de température (non représenté). L'ammoniac est vaporisé dans l'évaporateur 9 et son expansion provoque un abaissement de la température pouvant atteindre -25°C. La valve d'expansion 8 est régulée pour refroidir les gaz du pot d'échappement 10 à environ 4°C.

A l'intérieur du pot 10, sous l'évaporateur 9 se trouve le récupérateur de liquide de condensation 15. Un canal permet de pomper ce liquide et de le réinjecter dans le réservoir de carburant.

La pression de l'ammoniac initialement à environ 15 bars à la sortie du bouilleur termine à environ 1 ou 2 bars dans l'évaporateur 9. Une fois le cycle terminé, l'ammoniac est envoyé dans l'absorbeur 11 pour être absorbé par l'eau puis propulsé par une pompe 12 dans le bouilleur 1. Une vanne anti-retour 13 empêche le mélange de refluer dans la pompe à l'arrêt du moteur.

Dans une forme de l'invention, une partie de l'ammoniac sous pression est dérivée dans un deuxième circuit 14 pour la production de froid dans le but de refroidir l'habitacle ou une chambre frigorifique du véhicule. A noter que la production de froid de cette manière, non seulement ne consomme pratiquement aucune énergie et donc ne nuit en rien au rendement du véhicule, (ce qui est loin d'être le cas des systèmes actuels), mais a pour avantage de dépolluer les gaz de ce véhicule.

La figure 2 indique une manière élégante pour éviter la formation de dépôt le long du serpentin 17 placé dans le pot d'échappement 10. Il est connu que les gaz d'échappement ont tendance à encrasser les différents objets intérieurs, et le serpentin 17 à plus forte raison. Ceci provoquerait une rapide dégradation du rendement de l'installation. Pour éviter cet encrassement, il est proposé une solution inédite qui consiste à monter le serpentin 17 entre deux plaques fixes 19 à chaque extrémité, et une pluralité de plaques mobiles 18 entre ces deux plaques, ces dernières présentant des orifices ajustés au diamètre du serpentin. Les plaques fixes 19 comportent un grand nombre d'orifices pour laisser passer librement les gaz. Les plaques mobiles 18 sont tenues entre elles par des entretoises 21 et l'ensemble formé de ces plaques est maintenu dans la position de repos par des ressorts à faible moment de rappel 20, reliés aux plaques fixes 19. Ainsi, lorsque les gaz d'échappement entrent dans le pot, ils poussent les plaques mobiles 18 qui frottent le serpentin sur sa longueur, le débarrassant des résidus qui s'y sont fixés. Lorsque le régime du moteur décroît brusquement, une pression inverse est induite dans le pot d'échappement et les plaques mobiles 18 sont attirées vers l'entrée du pot. Ce mouvement de va-et-vient permet d'assurer un nettoyage automatique du serpentin.

Il est clair que les plaques mobiles 18 ne ferment pas complètement le diamètre du pot mais sont partiellement ouvertes, l'une sur sa partie inférieure, la suivante sur sa partie supérieure et ainsi de suite. Cette disposition force les gaz à effectuer un zigzag avant de finir leur chemin à la sortie du pot, et assure une pression contre les plaques mobiles. Cette configuration force également les gaz à traverser un réservoir d'eau qui se forme par condensation de la vapeur d'eau contenue dans les gaz. Ce chemin à travers le liquide permet de capturer les particules contenues dans les gaz.

Ces particules se déposent dans le fond du pot d'échappement et, lorsque le niveau est suffisant, se déversent dans le récupérateur 15. Selon une des variantes retenues pour l'invention, le récupérateur est vidé environ tous les 80'000 km.

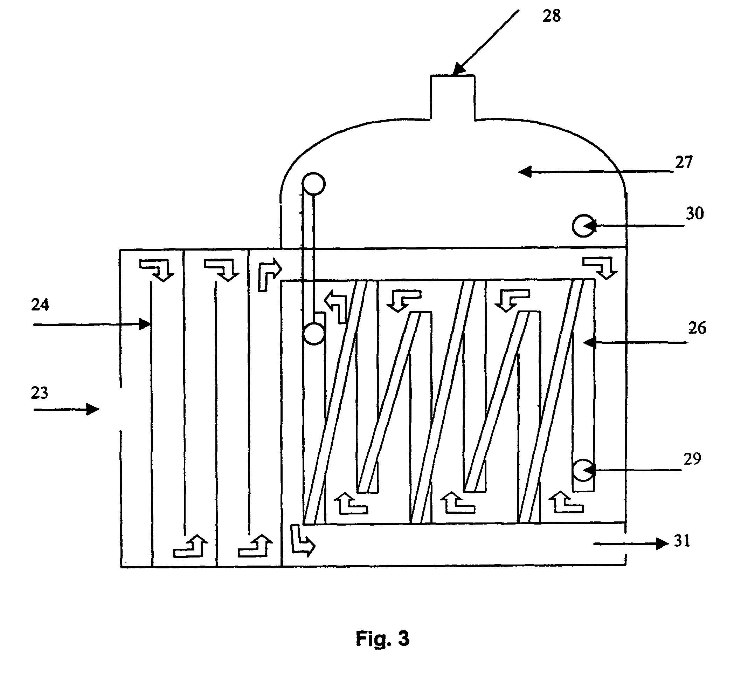

Sur la figure 3, une réalisation compacte d'une ensemble catalyseur-bouilleur est illustrée. Le rôle du catalyseur-bouilleur est de:
- brûler les résidus des fumées (CO-Nox-HC) grâce à un procédé de catalyse.
- réchauffer la solution riche exemple NH₃H₂O afin de séparer l'NH₃ de l'H₂O à travers un échangeur (3) et une chambre de bouillissage (4).

Les fumées sont admises à travers une ou plusieurs entrées 24 (selon que l'on aura choisi de mettre le bouilleur à la place du collecteur ou après le collecteur) dans la chambre de catalyse, celle-ci étant dotée de plaques 25 dont la matière et le nombre peuvent varier selon les véhicules (du plaqué or au plaqué platine en passant par certains aciers inoxydables etc. etc.)

Exemple: l'or fondant à 1064°C sera plus indiqué pour le Diesel. Pour les moteurs à essence il serait plus indiqué d'utiliser le platine qui fond à 1755°C.

Après la chambre de catalyse, les fumées passent à travers un échangeur 26 dans lequel elles réchauffent un liquide par exemple NH₃- H₂O, le portant à la température suffisante pour séparer l'NH₃ del'H₂O. Dans cet appareil donc, on libére les fumées d'une grande partie des Nox-CO et HC et l'on réchauffe un liquide (solution riche 29) de façon à obtenir, grâce à une séparation, un fluide réfrigérant.

Prenons l'exemple du liquide NH₃-H₂O. A 20°C un litre de H₂O peut absorber environ 520 gr soit 0,8 litre de NH₃ en augmentant la température du NH₃. Ce dernier, entrant en ébullition à partir de -33°C, se sépare de l'H₂O et se faisant il crée une pression telle que même si la température va au delà de 100°C (et pourrait atteindre 150°C) l'NH₃ sera vapeur et l'H₂O restera liquide (loi de Mollier). Cette action permet ainsi de séparer l'NH₃ de l'H₂O en convoyant uniquement l'NH₃ dans sa forme de réfrigérant 28 et l'H₂O, que l'on appellera solution pauvre 30 dans sa forme d'absorbeur pour un nouveau cycle.

Quant aux fumées, séparées d'une grande partie de Nox-CO et HC et, partiellement refroidies, elles se dirigent 31 vers d'autres dispositifs de décantation.

Pour les petits moteurs, et en particulier lorsqu'ils tournent au ralenti, la production de froid peut être insuffisante. Ceci est particulièrement le cas lorsque le froid est également utilisé pour d'autres buts tel que le refroidissement de l'habitacle du véhicule.

On retrouve ce même problème lorsque l'on dispose d'un petit moteur autonome qui a pour charge de générer l'énergie électrique ainsi que le froid pour une chambre de refroidissement.

Pour améliorer la production de froid, c'est-à-dire améliorer le rendement d'utilisation de la chaleur produite par le moteur pour la production de froid, il est proposé d'ajouter à la sortie du bouilleur 1, un premier échangeur de chaleur 22 en charge de préchauffer le mélange eau-ammoniac avant son envoi dans le bouilleur. Cet échangeur 22 accélère l'échauffement du mélange et pré-refroidit efficacement les gaz d'échappement.

Les gaz à la sortie du bouilleur sont à une température d'environ 140 °C et sont abaissés à une température d'environ 60°C à la sortie de l'échangeur 22. Grâce à cette configuration, le présence de l'étage de refroidissement 16 n'est plus nécessaire, les gaz étant refroidis suffisamment par l'échangeur 22. Le rendement global de transformation de la chaleur produite par le moteur pour la production de froid d'énergie dépasse 50%.

Les mesures effectuées sur les résidus polluants restant après le système de refroidissement des gaz montrent que 75% des émissions sont condensées. En effet, le système de refroidissement élimine la quasi totalité des hydrocarbures et la totalité des particules mais laisse passer du monoxyde de carbone (CO), de l'oxide d'azote (NOₓ) ainsi que des hydrocarbures (HC) à basse température d'ébullition.

Le catalyseur quant à lui brûle tout cela mais laisse passer les particules et en crée d'autres (platine, palladium, rhodium, etc) nettement plus nocives que le plomb.

Pour améliorer ce résultat, il est proposé de combiner le catalyseur généralement utilisé sur les véhicules à moteur et le système de refroidissement décrit plus haut.

Pour ce faire, un catalyseur 23 dûment isolé est placé juste à la sortie du moteur 2 avant le bouilleur 1. Grâce à la combinaison de ces deux techniques, on atteint l'élimination de toutes les particules quelle qu'elles soient, les résultats ont montré une élimination de 99% des émissions polluantes.

## Revendications

1. Dispositif de dépollution des gaz de combustion placé le long du circuit d'échappement desdits gaz, monté sur un véhicule à moteur, comprenant un bouilleur (1) dans lequel l'énergie thermique amenée par les gaz d'échappement produit l'évaporation d'un mélange réfrigérant-absorbant, un séparateur de liquide (3) situé à la sortie de la partie supérieure du bouilleur (1), un évaporateur (9) permettant le refroidissement des gaz d'échappement suivi d'un absorbeur (11) agencé entre ledit bouilleur (1) et ledit évaporateur (9) pour la recombinaison du mélange réfrigérant-absorbant, **caractérisé en ce qu'**il comprend un catalyseur (23) placé à la sortie des gaz du moteur et avant le bouilleur (1), une vanne d'expansion (8) placée en amont de l'évaporateur (9), ce dernier comportant un récupérateur (15) des gaz condensés et étant monté dans un pot d'échappement (10), une pompe (12) en aval de l'absorbeur (11) pour envoyer le mélange réfrigérant-absorbant dans le bouilleur (1) et un condenseur (4) placé entre le séparateur de liquide (3) et la vanne d'expansion (8) qui transforme sous forme liquide et grâce à la pression produite par le dispositif les vapeurs filtrées par le séparateur de liquide (3), ce dernier étant destiné à ne laisser passer que les vapeurs du réfrigérant.

2. Dispositif selon la revendication 1, **caractérisé en ce que** la vanne d'expansion (8) est régulée pour refroidir les gaz entre 3 et 6 degrés Celcius.

3. Dispositif selon les revendications 1 et 2, **caractérisé en ce que** le catalyseur (23) et le bouilleur (1) sont réalisés en une seule pièce.

4. Dispositif selon les revendications 1 à 3, **caractérisé en ce qu'**il comprend un ensemble de stockage (5, 6, 7) de liquide sous pression comprenant une première électrovanne (5) ouverte si la pression amont est supérieure à la pression aval, une deuxième électrovanne (6) ouverte dès lors que le moteur (2) fonctionne, et un réservoir (7) placé entre ces deux électrovannes et stockant le réfrigérant liquide sous pression.

5. Dispositif selon la revendication 4, **caractérisé en ce que** l'évaporateur (9) est composé d'un serpentin (17) allongé dont les parties rectilignes sont maintenues espacées entre-elles par des plaques mobiles (18) se déplaçant longitudinalement le long des parties rectilignes du serpentin (17) sous la pression des gaz d'échappement et assurant le nettoyage dudit serpentin (17).

6. Dispositif selon les revendications 1 à 5, **caractérisé en ce qu'**il comprend un échangeur de chaleur (22) placé entre le bouilleur et le pot d'échappement (10) destiné à préchauffer le mélange réfrigérant-absorbant à destination du bouilleur (1).

7. Procédé de dépollution des gaz de combustion du dispositif selon la revendication 1, **caractérisé en ce qu'**il consiste dans un premier temps à brûler lesdits gaz dans une chambre catalytique contenant ledit catalyseur (23), puis à refroidir lesdits gaz à une basse température pour provoquer la condensation des substances émises lors de la combustion.

8. Procédé selon la revendication 7, **caractérisé en ce qu'**il consiste à refroidir les gaz à une température située entre 3 et 6°C.

9. Procédé selon les revendications 7 et 8, **caractérisé en ce qu'**il consiste à récupérer un liquide résultant de la condensation des gaz.

10. Procédé selon l'une des revendications 7 à 9, **caractérisé en ce qu'**il consiste à utiliser l'énergie thermique des gaz d'échappement pour alimenter une unité de refroidissement fonctionnant sur la base de l'absorption par un mélange réfrigérant-absorbant.

## Patentansprüche

1. In ein Motorfahrzeug eingebaute Vorrichtung zur Entgiftung von Verbrennungsgasen, die entlang des Ausströmkreislaufs der Gase angeordnet ist und einen Brenner (1), in dem die von den Abgasen zugeführte Wärmeenergie das Verdampfen einer Kühlmittel-Absorptionsmittel-Mischung hervorruft, einen Flüssigkeitsabscheider (3), der am Ausgang des oberen Bereichs des Brenners (1) angeordnet ist, und einen die Kühlung der Abgase ermöglichenden Verdampfer (9) gefolgt von einem Absorber (11) aufweist, der zwischen dem Brenner (1) und dem Verdampfer (9) für die Rekombination der Kühlmittel-Absorptionsmittel-Mischung angeordnet ist, **dadurch gekennzeichnet, dass** sie einen Katalysator (23), der am Gasaustritt des Motors und vor dem Brenner (1) angeordnet ist, ein Expansionsventil (8), das stromaufwärts vor dem Verdampfer (9) angeordnet ist, wobei letzterer einen Rekuperator (15) für die kondensierten Gase aufweist und in einen Auspufftopf (10) montiert ist, eine Pumpe (12) stromabwärts hinter dem Absorber (11), um die Kühlmittel-Absorptionsmittel-Mischung in den Brenner (1) zu schicken, und einen zwischen dem Flüssigkeitsseparator (3) und dem Expansionsventil (8) angeordneten Kondensator (4) aufweist, der die vom Flüssigkeitsseparator (3) gefilterten Dämpfe aufgrund des von der Vorrichtung erzeugten Drucks in flüssige Form umwandelt, wobei letzterer dazu bestimmt ist, nur die Kühlmitteldämpfe durchzulassen.

2. Vorrichtung nach Anspruch 1, **dadurch gekennzeichnet, dass** das Expansionsventil (8) eingestellt ist, um die Gase auf zwischen 3 und 6 Grad Celsius zu kühlen.

3. Vorrichtung nach den Ansprüchen 1 und 2, **dadurch gekennzeichnet, dass** der Katalysator (23) und der Brenner (1) in einem Stück hergestellt sind.

4. Vorrichtung nach den Ansprüchen 1 bis 3, **dadurch gekennzeichnet, dass** sie eine Speichereinheit (5, 6, 7) für unter Druck stehende Flüssigkeit aufweist, die ein erstes Elektroventil (5), das offen ist, wenn der Druck stromaufwärts größer ist als stromabwärts, ein zweites Elektroventil (6), das offen ist, sobald der Motor (2) arbeitet, und einen Behälter (7) aufweist, der zwischen diesen beiden Elektroventilen angeordnet ist und das unter Druck stehende flüssige Kühlmittel speichert.

5. Vorrichtung nach Anspruch 4, **dadurch gekennzeichnet, dass** der Verdampfer (9) aus einer länglichen Rohrschlange (17) besteht, deren geradlinige Bereiche durch bewegliche Platten (18) zueinander in Abstand gehalten werden, die sich unter dem Druck der Abgase in Längsrichtung entlang der geradlinigen Bereiche der Rohrschlange (17) verschieben und die Reinigung der Rohrschlange (17) gewährleisten.

6. Vorrichtung nach den Ansprüchen 1 bis 5, **dadurch gekennzeichnet, dass** sie einen zwischen dem Brenner und dem Auspufftopf (10) angeordneten Wärmetauscher (22) aufweist, der dazu bestimmt ist, die für den Brenner (1) bestimmte Kühlmittel-Absorptionsmittel-Mischung vorzuwärmen.

7. Verfahren zur Entgiftung der Verbrennungsgase der Vorrichtung nach Anspruch 1, **dadurch gekennzeichnet, dass** es zunächst darin besteht, die Gase in einer den Katalysator (23) enthaltenden Katalysatorkammer zu verbrennen und dann die Gase auf eine niedrige Temperatur abzukühlen, um die Kondensation der bei der Verbrennung freigesetzten Substanzen hervorzurufen.

8. Verfahren nach Anspruch 7, **dadurch gekennzeichnet, dass** es darin besteht, die Gase auf eine Temperatur zwischen 3 und 6° C abzukühlen.

9. Verfahren nach den Ansprüchen 7 und 8, **dadurch gekennzeichnet, dass** es darin besteht, eine von der Kondensation der Gase stammende Flüssigkeit zu sammeln.

10. Verfahren nach einem der Ansprüche 7 bis 9, **dadurch gekennzeichnet, dass** es darin besteht, die Wärmeenergie der Abgase zu nutzen, um eine Kühleinheit zu speisen, die auf der Basis der Absorption durch eine Kühlmittel-Absorptionsmittel-Mischung arbeitet.

## Claims

1. Device for the removal of pollutants from combustion gases, placed along the exhaust circuit for the said gases and mounted on a motor vehicle, which device comprises a boiler (1), in which the thermal energy supplied by the exhaust gases causes a refrigerant/absorbent mixture to evaporate, a liquid separator (3), located at the outlet of the upper part of the boiler (1), and an evaporator (9) for cooling the exhaust gases followed by an absorber (11) placed between the said boiler (1) and the said evaporator (9) in order to recombine the refrigerant/absorbent mixture, **characterized in that** it comprises a catalyst unit (23) placed at the outlet for the gases from the engine and before the boiler (1), an expansion valve (8) placed upstream of the evaporator (9), which evaporator includes a recuperator (15) for recovering the condensed gases and is mounted in an exhaust silencer (10), a pump (12), downstream of the absorber (11) for sending the refrigerant/absorbent mixture into the boiler (1), and a condenser (4) placed between the liquid separator (3) and the expansion valve (8), which condenser, owing to the pressure produced by the device, converts the vapours filtered by the liquid separator (3) to a liquid form, said liquid separator being intended to let only the refrigerant vapours to pass through it.

2. Device according to Claim 1, **characterized in that** the expansion valve (8) is regulated so as to cool the gases to between 3 and 6 degrees Celsius.

3. Device according to Claims 1 and 2, **characterized in that** the catalyst unit (23) and the boiler (1) are made as a single component.

4. Device according to Claims 1 to 3, **characterized in that** it includes a pressurized-liquid storage system (5, 6, 7) comprising a first solenoid valve (5) which is open if the upstream pressure is above the downstream pressure, a second solenoid valve (6) which is opened as soon as the engine (2) is started, and, placed between these two solenoid valves, a tank (7) for storing the pressurized liquid refrigerant.

5. Device according to Claim 4, **characterized in that** the evaporator (9) is composed of an elongate coil (17), the straight parts of which are kept spaced apart by movable plates (18) that can move longitudinally along the straight parts of the coil (17) under the pressure of the exhaust gases and that ensure the cleaning of the said coil (17).

6. Device according to Claims 1 to 5, **characterized in that** it includes a heat exchanger (22) that is placed between the boiler and the silencer (10) and is intended to preheat the refrigerant/absorbent mixture to be sent to the boiler (1).

7. Method of removing pollutants from combustion gases using the device according to Claim 1, **characterized in that** it consists firstly in burning the said gases in a catalytic chamber containing the said catalyst unit (23) then in cooling the said gases down to a low temperature in order to cause the substances emitted during the combustion to condense.

8. Method according to Claim 7, **characterized in that** it consists in cooling the gases down to a temperature of between 3 and 6°C.

9. Method according to Claims 7 and 8, **characterized in that** it consists in recovering a liquid resulting from the condensation of the gases.

10. Method according to one of Claims 7 to 9, **characterized in that** it consists in using the thermal energy of the exhaust gases to feed a cooling unit that operates on the basis of absorption by a refrigerant/absorbent mixture.
